# EUROPEAN PATENT SPECIFICATION

(11) **EP 2 878 059 B1**
(45) Date of publication and mention of the grant of the patent: **30.03.2016**
(21) Application number: 12750608.7
(22) Date of filing: 26.07.2012
(51) Int. Cl.: H02J 3/44

(54) **METHOD AND ARRANGEMENT TO CONTROL POWERS OF AT LEAST TWO GENERATOR SETS**
VERFAHREN UND ANORDNUNG ZUR STEUERUNG DER LEISTUNG VON WENIGSTENS ZWEI GENERATORSÄTZEN
COMMANDE ET DISPOSITIF POUR CONTRÔLER LES PUISSANCES ÉLECTRIQUES D'AU MOINS DEUX GROUPES ÉLECTROGÈNES

(43) Date of publication of application: 03.06.2015
(73) Proprietor: Wärtsilä Finland Oy, 65380 Vaasa (FI)
(72) Inventor: ÖSTMAN, Fredrik, FI-65100 Vaasa (FI); KAAS, Tom, FI-65410 Solf (FI)
(74) Representative: Berggren Oy Ab
(86) International application number: PCT/FI2012/050752
(87) International publication number: WO 2014/016466

(56) References cited:
- JP-A- H09 200 962
- JP-A- 2000 166 100

## Description

### Field of invention

The present invention relates to load sharing of generator sets. Powers of the generator sets are controlled for sharing load between the generator sets. The generator sets are connectable to an electrical network for power distribution. Especially the invention relates to cases where the generator sets are connected to a weak power distribution network. The weak network means a relatively small power distribution network, such as a network on a ship or in an industrial plant, wherein a single generator set provides a great amount of power with respect to the total power of all the generator sets. Therefore, malfunction of one generator set has a great influence on the operation of the weak network.

A generator set means a combination of an engine and generator. The engine produces mechanical power, and the generator transforms the mechanical power to electrical power.

### Background art

It is known to control power production and torsional vibrations of a single generator set. It is also known to control load sharing and power distribution of the total power of the generator sets. The power production is kept as close as possible to the power consumption of the distribution network.

Publication CA 1,114, 901 discloses one example of a known load sharing system. In this system, the control assures that the total power provided to a common load is properly shared between the power sources by the use of feedback techniques. An electrical quantity is measured in the power distribution network and compared to a reference value. A difference between the measurement and the reference value affects each generator set specific control.

Despite of the different control systems, the total power of the generator sets connected to the distribution network tends to fluctuate. The power fluctuation occurs especially in the weak distribution networks. The power fluctuation decreases the efficiency of the power distribution system and may cause unnecessary reactions and functions as response to the detected fluctuation.

### Brief description of the invention

The aim of the invention is to alleviate the fluctuation of the total power of the generator sets. The aim is achieved with the means disclosed in the independent claims. The dependent claims describe the various embodiments of the invention.

The invention is based on an idea that the lowest harmonic waves of rotational feature of the engines of the generator sets are adjusted to be in the same phase. The adjustment of the lowest harmonic wave is an adequate action in most cases, but the next lowest harmonic wave may also be adjusted in addition if needed. The upper harmonic waves can also be adjusted, but it increases the complexity of the adjustment system and has no significant effect in most cases.

The inventive method for adjusting powers of at least two generator sets comprises step of measuring rotational feature of each engine, calculating at least the lowest harmonic wave of said rotational feature of each engine, obtaining crank angle information of each engine, determining a phase of each engine with respect to a global phase coordinate, determining a phase of each harmonic wave in the global phase coordinate, calculating phase differences between the corresponding phases of the engines, calculating a global crank angle reference of each harmonic wave, and adjusting actuator means of each engine to obtain global crank angle reference of the respective order.

The inventive arrangement for controlling powers of at least two generator sets comprises at least generator set specific control units. Each control unit is arranged to receive measurement data from the generator set and outside the generator set. The arrangement is arranged to process the functions of the inventive method i.e. receive measurement data of rotational feature of each engine, calculate at least the lowest harmonic wave of said rotational feature of each engine, obtain crank angle information of each engine, determine a phase of each engine with respect to a global phase coordinate, determine a phase of each harmonic wave in the global phase coordinate, calculate phase differences between the corresponding phases of the engines, calculate a global crank angle reference of each harmonic wave and adjust actuator means of each engine to obtain global crank angle reference of the respective order.

### List of figures

In the following the invention is described in more detail by reference to the appended figures, in which
- Figure 1: shows an example of an inventive system,
- Figure 2: shows a flow diagram example of the inventive method and
- Figure 3: shows an example of a transformation of coordinates.

### Description

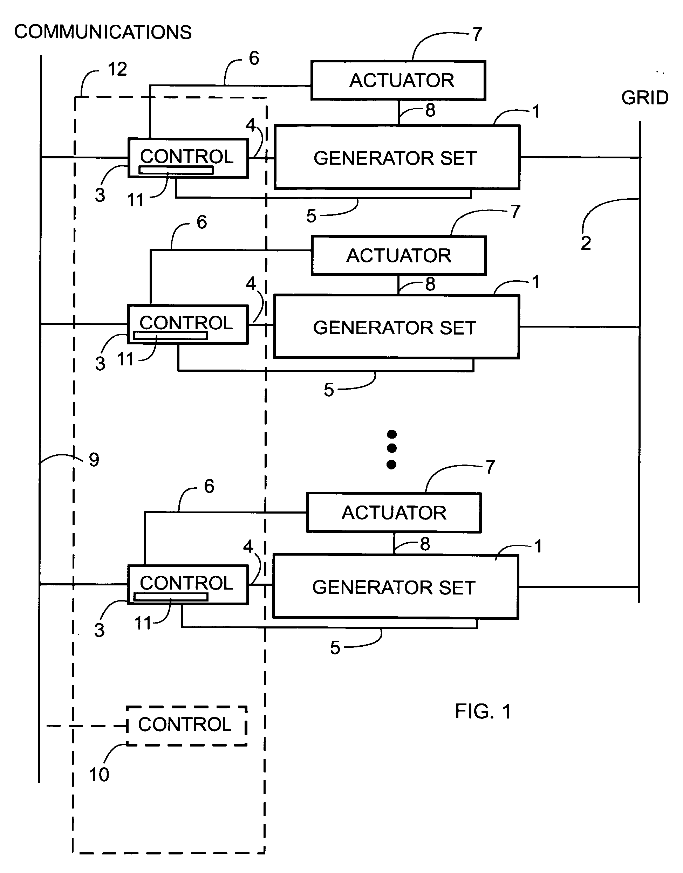

The example of Figure 1 shows that the generator sets 1 are connected to power distribution network 2. Generator specific control units 3 are connected to communication network 9 for communicating with each other. The communication network 9 can, for example, be a CAN, Modbus, LAN, WLAN, or any other system suitable for connecting control units 3.

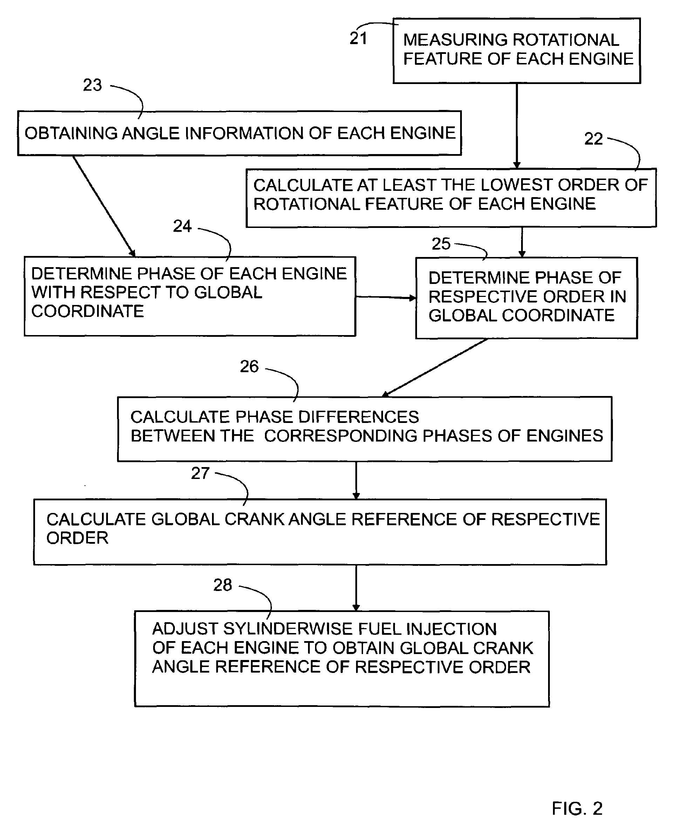

According to figure 2, the method for adjusting powers of at least two generator sets comprises a step 21 of measuring rotational feature of each engine. The engine is the engine that supplies power to the generator of the generator set. The engine is a reciprocating engine. The rotational feature can be angular position, speed or acceleration of the shaft system of the generator set from at least one location. The rotational feature can also be voltage, current or frequency of the generator or torque measured from the shaft or cylinder pressures of the engine. The voltage, current or frequency of the generator can be used since the engine is connected to the generator via a shaft system that is called as a common shaft or common shaft system. The rotation of the engine affects to the rotation of the generator and thus to the voltage, current of frequency. In method step 22, at least the lowest harmonic wave of the rotational feature of each engine is calculated. The convenient way is to calculate DFT (Discrete Fourier Transformation).

In step 22, crank angle information of each engine is obtained, which information is needed for determining phase of each engine at step 24. The phases of the engines should be transformed to a global coordinate in order to compare phases of different engines. The global coordinate means a coordinate that is same for the all engines. The crank angle information can, for example, be a TDC (Top Dead Center) value of one of the cylinder of the engine, or cam shaft phase or cylinder pressure of at least one cylinder of the engine or crank angle data. The crank angle information can be real time measurement data or predetermined data. The global coordinate can, for example, be based on a TDC of one engine, a local time, a separate oscillator etc.

In step 25, the phases of the calculated harmonic waves are also determined in the global coordinate, for example by transforming phases to the same coordinate system.

The differences between the corresponding phases of the harmonic waves of the engines are calculated in step 26. The differences are used in step 27 to calculate a global (common) crank angle reference of the respective harmonic wave (order). The crank angle reference can, for example, be based an average difference value of the differences. The use of the phase differences makes it possible to achieve the crank angle reference that is close to the phases of the harmonic waves on average. The near crank angle reference is advantageous when adjusting 28 actuator means of each engine to obtain global crank angle reference of the respective order. In this way the adjustments (of actuators) are kept as little as possible, and they affect as less as possible to other control arrangements of the generator sets.

The step 28 of adjusting the actuator means of each engine can be arranged to adjust cylinderwise fuel injection system of each engine. The step 28 of adjusting the actuator means of each engine can also be executed with a generator set specific electric motor producing counter-phase torque or with an excitation current system of each generator. It is noted that adjusting the actuator means of each engine can also be a combination of previously mentioned adjustments.

The arrangement 12 for controlling powers of at least two generator sets is arranged to process the functions of the invention. Since the functions can be divided into several devices in different ways, there exist many embodiments. Figure 1 illustrates some of them. The embodiment of Figure 1 comprises at least generator set 1 specific control units 3. Each control unit 3 is arranged to receive measurement data from the generator set 5 and outside the generator set. The control units 3 communicate with each other and a possible monitoring system (not showed) via a communication media 9. Each control unit 3 can be arranged to receive measurement data 5 of rotational feature of each engine and calculate at least the lowest harmonic wave of said rotational feature. As said above the rotational feature of the engines can be the angular position, speed or acceleration of the shaft system of the generator from at least one location; or voltage, current or frequency of the generator; or torque or cylinder pressures of the engine. When a flexible coupling is used between the engine and the generator of the generator set 1, it is convenient to measure the feature of the shaft system from both sides of the coupling. The sensor/s type for the measurements depends on the feature to be measured. It is convenient to use Fast Fourier Transformation for calculating at least the lowest harmonic wave.

The control unit 3 is also arranged to obtain 4 crank angle information of each engine, determine a phase of each engine with respect to a global phase coordinate system and determine a phase of each harmonic wave in the global phase coordinate system. As already said the crank angle information can be a predetermined value like TDC) or a real time measurement value, and the information can be a TDC value of one of the cylinder of the engine, or cam shaft phase or cylinder pressure of at least one cylinder of the engine or crank angle data. The phase is a crank angle value of the engine in relation to a reference value, such as the TDC. In order that the phases are comparable with each other, they are transformed to the common coordinate, i.e. the global phase coordinate system said above. The phases of the harmonic waves are also transformed to the global coordinate. Figure 3 illustrates the principle of the transformation of the coordinates system. The coordinate systems of engines 1 and 2 are transformed to the global coordinate system. The illustrated phases of the engines are also transformed to the global coordinate in the example of figure 3.

Further, the control unit 3 is arranged to calculate phase differences between the corresponding phases of the engines and calculate a global crank angle reference of each harmonic wave. The phase differences are calculated in each calculated harmonic wave. The calculation of the global crank angle reference comprises a calculation of an average value of said phase differences that is used for calculating the reference. The control units 3 provides adjustment data 6 to the actuator means 7 of each engine to obtain global crank angle reference of the respective order. The result is that the adjustment 8 executed by the actuator means 7 changes the rotation angle as little as possible.

For processing these functions each control unit 3 is arranged to transmit the generator set information to the other control units and receive respective information from the other control units. Further, it is convenient that each control unit 3 comprises an adjustment unit 11 that is arranged to process said functions. In this way, the manufacturing of the control unit can be easier.

Another embodiment is that it comprises generator specific control units 3 and a central control unit 10 that is arranged to communicate with the control units and to process said functions of determining a phase of each engine with respect to a global phase coordinate, determining a phase of each harmonic wave in the global phase coordinate, calculating phase differences between the corresponding phases of the engines and calculating a global crank angle reference of each harmonic wave. Each control unit 3 is arranged to communicate with the central control unit 10, and comprises an adjustment unit 11 that is arranged to process the rest of said functions.

Further another embodiment comprises also a central control unit 10 that is arranged to communicate with the control units 3 and to process said functions of calculating phase differences between the corresponding phases of the engines and calculating a global crank angle reference of each harmonic wave. Each control unit 3 is arranged to communicate with the central control unit 10, and comprises an adjustment unit 11 that is arranged to process the rest of said functions.

In each embodiment described above, the actuator means can be a cylinderwise fuel injection system of each engine, a generator set specific electric motor producing counter-phase torque or an excitation current system of each generator.

In light of the above examples it is obvious that the embodiment according to the invention can be realized in a number of ways. It is also obvious that the invention is not limited to the examples mentioned here, but that the invention can be realized within the scope of the appended claims.

## Claims

1. A method for adjusting powers of at least two generator sets, **characterized in that** the method comprises steps of:
measuring rotational feature of each engine (21),
calculating at least the lowest harmonic wave of said rotational feature of each engine (22),
obtaining crank angle information of each engine (23),
determining a phase of each engine with respect to a global phase coordinate (24),
determining a phase of each harmonic wave in the global phase coordinate (25),
calculating phase differences between the corresponding phases of the engines (26),
calculating a global crank angle reference of each harmonic wave (27),
adjusting actuator means of each engine to obtain global crank angle reference of the respective order (28).

2. A method according to claim 1, **characterized in that** the step (27) of calculating the global crank angle reference of each harmonic wave comprises a calculation of an average value of said phase differences to be used for calculating the global crank angle reference.

3. A method according to claim 1 or 2, **characterized in that** the step (28) of adjusting is arranged to adjust cylinderwise fuel injection system of each engine, a generator set specific electric motor producing counter-phase torque or an excitation current system of each generator.

4. A method according to claim 3, **characterized in that** the step (21) of measuring rotational feature of each engine is arranged to measure angular position, speed or acceleration of the shaft system of the generator set from at least one location, or to measure voltage, current or frequency of the generator, or to measure torque or cylinder pressures of the engine.

5. A method according to claim 4, **characterized in that** the step (23) of obtaining crank angle information of each engine is arranged to obtain a TDC value of one of the cylinder of the engine, or cam shaft phase or cylinder pressure of at least one cylinder of the engine or crank angle data.

6. A method according to claim 5, **characterized in that** the step (22) of calculating at least the lowest harmonic wave is arranged to calculate DFT.

7. An arrangement (12) to control powers of at least two generator sets, which arrangement comprises at least generator set specific control units (3), which each unit is arranged to receive measurement data from the generator set and outside the generator set, **characterized in that** the arrangement is arranged to:
receive measurement data of rotational feature of each engine (5),
calculate at least the lowest harmonic wave of said rotational feature of each engine,
obtain crank angle information of each engine (4),
determine a phase of each engine with respect to a global phase coordinate,
determine a phase of each harmonic wave in the global phase coordinate
calculate phase differences between the corresponding phases of the engines
calculate a global crank angle reference of each harmonic wave,
adjust actuator means of each engine to obtain global crank angle reference of the respective order (6).

8. An arrangement according to claim 7, **characterized in that** each control unit (3) is arranged to transmit the generator set information to the other control units and receive respective information from the other control units, and each control unit (3) comprises an adjustment unit (11) that is arranged to process said functions.

9. An arrangement according to claim 7, **characterized in that** the arrangement further comprises a central control unit (10) that is arranged to communicate with the control units (3) and to process said functions of
determining a phase of each engine with respect to a global phase coordinate,
determining a phase of each harmonic wave in the global phase coordinate
calculating phase differences between the corresponding phases of the engines
calculating a global crank angle reference of each harmonic wave,
and each control unit (3) is arranged to communicate with the central control unit (10), and comprises an adjustment unit (11) that is arranged to process the rest of said functions.

10. An arrangement according to claim 7, **characterized in that** the arrangement further comprises a central control unit (10) that is arranged to communicate with the control units (3) and to process said functions of
calculating phase differences between the corresponding phases of the engines
calculating a global crank angle reference of each harmonic wave,
and each control unit (3) is arranged to communicate with the central control unit (10), and comprises an adjustment unit (11) that is arranged to process the rest of said functions.

11. An arrangement according to claim 7 - 10, **characterized in that** the calculation of the global crank angle reference of each harmonic wave comprises a calculation of an average value of said phase differences to be used for calculating the global crank angle reference.

12. An arrangement according to claim 11, **characterized in that** the actuator means (7) are a cylinderwise fuel injection system of each engine, a generator set specific electric motor producing counter-phase torque or an excitation current system of each generator.

13. An arrangement according to claim 12, **characterized in that** the rotational feature of the engines is an angular position, speed or acceleration of the shaft system of the generator from at least one location; or voltage, current or frequency of the generator; or torque or cylinder pressures of the engine.

14. An arrangement according to claim 13, **characterized in that** the crank angle information of each engine is a TDC value of one of the cylinder of the engine, or cam shaft phase or cylinder pressure of at least one cylinder of the engine or crank angle data.

15. An arrangement according to claim 14, **characterized in that** the calculation of at least the lowest harmonic wave comprises a DFT.

## Patentansprüche

1. Verfahren zum Anpassen der Leistungen von mindestens zwei Generatorsätzen, **dadurch gekennzeichnet, dass** das Verfahren die folgenden Schritte umfasst:
Messen einer Dreheigenschaft jeder Maschine (21);
Berechnen mindestens der niedrigsten harmonischen Welle der Dreheigenschaft jeder Maschine (22);
Erhalten von Kurbelwinkelinformationen jeder Maschine (23),
Bestimmen einer Phase jeder Maschine bezüglich einer globalen Phasenkoordinate (24),
Bestimmen einer Phase einer jeden harmonischen Welle in der globalen Phasenkoordinate (25),
Berechnen der Phasendifferenzen zwischen den entsprechenden Phasen der Maschinen (26),
Berechnen einer globalen Kurbelwinkelreferenz einer jeden harmonischen Welle (27),
Anpassen von Mitteln einer Betätigungsvorrichtung einer jeden Maschine, um eine globale Kurbelwinkelreferenz der jeweiligen Ordnung zu erhalten (28).

2. Verfahren nach Anspruch 1, **dadurch gekennzeichnet, dass** der Schritt (27) des Berechnens der globalen Kurbelwinkelreferenz einer jeden harmonischen Welle eine Berechnung eines durchschnittlichen Werts der Phasendifferenzen, der verwendet werden soll, um die globale Kurbelwinkelreferenz zu berechnen, umfasst.

3. Verfahren nach Anspruch 1 oder 2, **dadurch gekennzeichnet, dass** der Schritt (28) des Anpassens angeordnet ist, um zylinderweise ein Kraftstoffeinspritzsystem jeder Maschine, einen für einen Generatorsatz spezifischen Elektromotor, der ein gegenphasiges Drehmoment erzeugt, oder ein Erregungsstromsystem von jedem Generator anzupassen.

4. Verfahren nach Anspruch 3, **dadurch gekennzeichnet, dass** der Schritt (21) des Messens einer Dreheigenschaft jeder Maschine angeordnet ist, um eine Winkelposition, Geschwindigkeit oder Beschleunigung des Wellensystems des Generatorsatzes von mindestens einem Ort zu messen oder um die Spannung, den Strom oder die Frequenz des Generators zu messen, oder um das Drehmoment oder die Zylinderdrücke der Maschine zu messen.

5. Verfahren nach Anspruch 4, **dadurch gekennzeichnet, dass** der Schritt (23) des Erhaltens von Kurbelwinkelinformationen jeder Maschine angeordnet ist, um einen TDC-Wert (TDC = Top Dead Centre = oberer Totpunkt) von einem der Zylinder der Maschine zu erhalten, oder um eine Nockenwellenphase oder einen Zylinderdruck von mindestens einem Zylinder der Maschine oder um Kurbelwinkeldaten zu erhalten.

6. Verfahren nach Anspruch 5, **dadurch gekennzeichnet, dass** der Schritt (22) des Berechnens mindestens der niedrigsten harmonischen Welle angeordnet ist, um DFT zu berechnen.

7. Anordnung (12), um die Leistungen von mindestens zwei Generatorsätzen zu steuern, wobei die Anordnung mindestens Steuereinheiten (3) umfasst, die für den Generatorsatz spezifisch sind, und wobei jede Einheit angeordnet ist, um Messdaten von dem Generatorsatz und von außerhalb des Generatorsatzes zu empfangen, **dadurch gekennzeichnet, dass** die Anordnung angeordnet ist, um:
Messdaten von einer Dreheigenschaft jeder Maschine zu empfangen (5),
Kurbelwinkelinformationen jeder Maschine zu erhalten (4),
eine Phase jeder Maschine bezüglich einer globalen Phasenkoordinate zu bestimmen,
eine Phase jeder harmonischen Welle in der globalen Phasenkoordinate zu bestimmen,
Phasendifferenzen zwischen den entsprechenden Phasen der Maschinen zu berechnen,
eine globale Kurbelwinkelreferenz jeder harmonischen Welle zu berechnen,
Mittel einer Betätigungsvorrichtung einer jeden Maschine anzupassen, um eine globale Kurbelwinkelreferenz der jeweiligen Ordnung zu erhalten (6).

8. Anordnung nach Anspruch 7, **dadurch gekennzeichnet, dass** jede Steuereinheit (3) angeordnet ist, um die Generatorsatzinformationen an die anderen Steuereinheiten zu übertragen und um die jeweiligen Informationen von den anderen Steuereinheiten zu empfangen, und dass jede Steuereinheit (3) eine Anpassungseinheit (11) umfasst, die angeordnet ist, um diese Funktionen zu verarbeiten.

9. Anordnung nach Anspruch 7, **dadurch gekennzeichnet, dass** die Anordnung ferner eine zentrale Steuereinheit (10) umfasst, die angeordnet ist, um mit den anderen Steuereinheiten (3) zu kommunizieren und um die folgenden Funktionen zu verarbeiten:
Bestimmen einer Phase jeder Maschine bezüglich einer globalen Phasenkoordinate,
Bestimmen einer Phase einer jeden harmonischen Welle in der globalen Phasenkoordinate,
Berechnen der Phasendifferenzen zwischen den entsprechenden Phasen der Maschinen,
Berechnen einer globalen Kurbelwinkelreferenz einer jeden harmonischen Welle,
und jede Steuereinheit (3) ist angeordnet, um mit der zentralen Steuereinheit (10) zu kommunizieren, und umfasst eine Anpassungseinheit (11), die angeordnet ist, um den Rest von den Funktionen zu verarbeiten.

10. Anordnung nach Anspruch 7, **dadurch gekennzeichnet, dass** die Anordnung ferner eine zentrale Steuereinheit (10) umfasst, die angeordnet ist, um mit den anderen Steuereinheiten (3) zu kommunizieren und um die folgenden Funktionen zu verarbeiten:
Berechnen der Phasendifferenzen zwischen den entsprechenden Phasen der Maschinen,
Berechnen einer globalen Kurbelwinkelreferenz einer jeden harmonischen Welle,
und jede Steuereinheit (3) ist angeordnet, um mit der zentralen Steuereinheit (10) zu kommunizieren, und umfasst eine Anpassungseinheit (11), die angeordnet ist, um den Rest von den Funktionen zu verarbeiten.

11. Anordnung nach Anspruch 7 bis 10, **dadurch gekennzeichnet, dass** die Berechnung der globalen Kurbelwinkelreferenz einer jeden harmonischen Welle eine Berechnung eines durchschnittlichen Werts der Phasendifferenzen, der verwendet werden soll, um die globale Kurbelwinkelreferenz zu berechnen, umfasst.

12. Anordnung nach Anspruch 11, **dadurch gekennzeichnet, dass** die Mittel einer Betätigungsvorrichtung (7) ein zylinderweises Kraftstoffeinspritzsystem jeder Maschine, einen für einen Generatorsatz spezifischen Elektromotor, der ein gegenphasiges Drehmoment erzeugt, oder ein Erregungsstromsystem jeweils für jeden Generator darstellen.

13. Anordnung nach Anspruch 12, **dadurch gekennzeichnet, dass** die Dreheigenschaft der Maschinen eine Winkelposition, eine Geschwindigkeit oder eine Beschleunigung des Wellensystems des Generators von mindestens einem Ort ist; oder eine Spannung, ein Strom oder eine Frequenz des Generators; oder ein Drehmoment oder die Zylinderdrücke der Maschine.

14. Anordnung nach Anspruch 13, **dadurch gekennzeichnet, dass** die Kurbelwinkelinformationen jeder Maschine einen TDC-Wert von einem der Zylinder der Maschine oder eine Nockenwellenphase oder einen Zylinderdruck von mindestens einem Zylinder der Maschine oder Kurbelwinkeldaten darstellen.

15. Anordnung nach Anspruch 14, **dadurch gekennzeichnet, dass** die Berechnung mindestens der niedrigsten harmonischen Welle eine DFT umfasst.

## Revendications

1. Procédé d'ajustement des puissances d'au moins deux ensembles générateurs, **caractérisé en ce que** ce procédé comprend les étapes suivantes :
mesure de la caractéristique de rotation de chaque moteur (21),
calcul au moins de l'onde d'harmonique la plus faible de ladite caractéristique de rotation de chaque moteur (22),
obtention d'informations d'angle de vilebrequin de chaque moteur (23),
détermination d'une phase de chaque moteur par rapport à une coordonnée de phase globale (24),
détermination d'une phase de chaque onde d'harmonique dans la coordonnée de phase globale (25),
calcul des différences de phase entre les phases correspondantes des moteurs (26),
calcul d'une référence d'angle de vilebrequin globale de chaque onde d'harmonique (27),
ajustement du moyen d'actionnement de chaque moteur pour obtenir une référence d'angle de vilebrequin globale de l'ordre respectif (28).

2. Procédé selon la revendication 1, **caractérisé en ce que** l'étape (27) de calcul de la référence d'angle de vilebrequin globale de chaque onde d'harmonique comprend un calcul d'une valeur moyenne desdites différences de phases à utiliser pour calculer la référence d'angle de vilebrequin globale.

3. Procédé selon la revendication 1 ou 2, **caractérisé en ce que** l'étape (28) d'ajustement est conçue pour régler le système d'injection de carburant par cylindre de chaque moteur, un moteur électrique spécifique à l'ensemble générateur produisant un couple à contre-phase ou un système de courant d'excitation de chaque générateur.

4. Procédé selon la revendication 3, **caractérisé en ce que** l'étape (21) de mesure de la caractéristique de rotation de chaque moteur est conçue pour mesurer la position angulaire, la vitesse d'accélération du système d'arbre de l'ensemble générateur depuis au moins un endroit ou pour mesurer la tension, le courant ou la fréquence du générateur ou pour mesurer le couple ou la pression des cylindres du moteur.

5. Procédé selon la revendication 4, **caractérisé en ce que** l'étape (23) d'obtention d'informations d'angle de vilebrequin de chaque moteur est conçue pour obtenir une valeur TDC d'un des cylindres du moteur ou une phase d'arbre de came ou une pression de cylindre d'au moins un cylindre du moteur ou des données d'angle de vilebrequin.

6. Procédé selon la revendication 5, **caractérisé en ce que** l'étape (22) de calcul au moins de l'onde d'harmonique la plus faible est conçue pour calculer la DFT.

7. Dispositif (12) de commande des puissances d'au moins deux ensembles générateurs, lequel dispositif comprend au moins des unités de commande spécifiques à l'ensemble générateur (3), chacune de ces unités étant conçue pour recevoir des données de mesure de l'ensemble générateur et à l'extérieur de l'ensemble générateur, **caractérisé en ce que** le dispositif est conçu pour :
recevoir des données de mesure de ladite caractéristique de rotation de chaque moteur (5),
calculer au moins l'onde d'harmonique la plus faible de ladite caractéristique de rotation de chaque moteur,
obtenir une information d'angle de manivelle de chaque moteur (4),
déterminer une phase de chaque moteur par rapport à une coordonnée de phase globale,
déterminer une phase de chaque onde d'harmonique dans la coordonnée de phase globale,
calculer les différences de phases entre les phases correspondantes des moteurs,
ajuster un moyen d'actionnement de chaque moteur pour obtenir une référence d'angle de vilebrequin globale de l'ordre respectif (6).

8. Dispositif selon la revendication 7, **caractérisé en ce que** chaque unité de commande (3) est conçue pour transmettre l'information de l'ensemble générateur aux autres unités de commande et recevoir une information respective des autres unités de commande et chaque unité de commande (3) comprend une unité d'ajustement (11) qui est conçue pour traiter lesdites fonctions.

9. Dispositif selon la revendication 7, **caractérisé en ce que** le dispositif comprend en outre une unité de commande centrale (10) qui est conçue pour communiquer avec les unités de commande (3) et pour traiter lesdites fonctions de
détermination d'une phase de chaque moteur par rapport à une coordonnée de phase globale,
déterminer une phase de chaque onde d'harmonique dans la coordonnée de phase globale,
calculer des différences de phases entre les phases correspondantes des moteurs,
calculer une référence d'angle de vilebrequin globale de chaque onde d'harmonique,
et que chaque unité de commande (3) est conçue pour communiquer avec l'unité de commande centrale (10) et comprend une unité d'ajustement (11) qui est conçue pour traiter le reste desdites fonctions.

10. Dispositif selon la revendication 7, **caractérisé en ce que** le dispositif comprend en outre une unité de commande centrale (10) qui est conçue pour communiquer avec les unités de commande (3) et pour traiter lesdites fonctions de
calcul des différences de phases entre les phases correspondantes des moteurs,
calcul d'une référence d'angle de vilebrequin globale de chaque onde d'harmonique,
et que chaque unité de commande (3) est conçue pour communiquer avec l'unité de commande centrale (10) et comprend une unité d'ajustement (11) qui est conçue pour traiter le reste desdites fonctions.

11. Dispositif selon les revendications 7 à 10, **caractérisé en ce que** le calcul de la référence d'angle de vilebrequin globale de chaque onde d'harmonique comprend un calcul d'une valeur moyenne desdites différences de phases à utiliser pour calculer la référence d'angle de vilebrequin globale.

12. Dispositif selon la revendication 11, **caractérisé en ce que** les moyens d'actionnement (7) sont un système d'injection de carburant par cylindre de chaque moteur, un moteur électrique spécifique à l'ensemble générateur produisant un couple à contre-phase ou un système de courant d'excitation de chaque générateur.

13. Dispositif selon la revendication 12, **caractérisé en ce que** de la caractéristique de rotation des moteurs est une position angulaire, une vitesse d'accélération du système d'arbre du générateur depuis au moins un emplacement ; ou une tension, un courant ou une fréquence du générateur ; ou un couple ou des pressions de cylindres du moteur.

14. Dispositif selon la revendication 13, **caractérisé en ce que** l'information d'angle de vilebrequin de chaque moteur est une valeur TDC d'un des cylindres du moteur ou une phase d'arbre de came ou une pression de cylindre d'au moins un cylindre du moteur ou des données d'angle de vilebrequin.

15. Dispositif selon la revendication 14, **caractérisé en ce que** le calcul de l'au moins une onde d'harmonique la plus faible comprend une DFT.
